# EUROPÄISCHE PATENTSCHRIFT

(11) **EP 2 288 653 B1**
(45) Veröffentlichungstag und Bekanntmachung des Hinweises auf die Patenterteilung: **19.02.2020**
(21) Anmeldenummer: 09757389.3
(22) Anmeldetag: 15.05.2009
(51) Int. Cl.: C08L 21/00

(54) **KAUTSCHUKMISCHUNG MIT VERBESSERTEM ABRIEB**
RUBBER MIXTURE WITH IMPROVED ABRASION
MÉLANGE DE CAOUTCHOUCS AYANT UNE RÉSISTANCE ACCRUE À L'ABRASION

(30) Priorität: 05.06.2008 US 156803
(43) Veröffentlichungstag der Anmeldung: 02.03.2011
(73) Patentinhaber: Continental Reifen Deutschland GmbH, 30165 Hannover (DE)
(72) Erfinder: RECKER, Carla, 30167 Hannover (DE); HERZOG, Katharina, 31177 Harsum (DE); YORK, William Michael, Concord North Carolina 28025 (US); MERGELL, Boris, 30890 Barsinghausen (DE); TKACHENKO, Viktoriya, 30171 Hannover (DE); MUELLER, Norbert, 29336 Nienhagen (DE); WAGEMANN, Jürgen, 31162 Bad Salzdetfurth (DE)
(74) Vertreter: Finger, Karsten
(86) Internationale Anmeldenummer: PCT/EP2009/055914
(87) Internationale Veröffentlichungsnummer: WO 2009/147006

(56) Entgegenhaltungen:
- EP-A- 1 000 968
- EP-A- 1 533 336

## Beschreibung

Die Erfindung betrifft eine Kautschukmischung mit verbessertem Abriebsverhalten, insbesondere für Fahrzeugreifen.

Zur Beeinflussung der Mischungs- und Vulkanisateigenschaften werden den Mischungen unterschiedlichste Zuschlagstoffe beigemischt und/oder es werden spezielle Polymere verwendet. Als Zuschlagstoffe seien beispielhaft an dieser Stelle Füllstoffe (z. B. Ruß), Weichmacher, Alterungsschutzmittel und Vernetzungssysteme aus Schwefel, Beschleuniger und Aktivator genannt. Wird durch Variation der Mischung eine Eigenschaft verbessert, geht dies aber häufig mit einer Verschlechterung einer anderen Eigenschaft einher, so dass gewisse Zielkonflikte vorliegen. Bei Mischungen für Laufstreifen von Fahrzeugreifen bestehen solche Zielkonflikte beispielsweise im Hinblick auf das Abriebsverhalten und den erhöhten Wärmeaufbau, der eine schlechtere Rückprallelastizität, folglich einen schlechteren Rollwiderstand bedingt. Zur Lösung dieser Zielkonflikte werden vor allem Variationen in der Mischungszusammensetzung herangezogen, insbesondere auch die Änderung oder Anpassung Zuschlagstoffe, um ein verbessertes Niveau der sich üblicherweise konträr verhaltenden Eigenschaften zu erzielen.

Eine wichtige Zuschlagstoffgruppe, die auf die Vulkanisationsgeschwindigkeit und die physikalischen Eigenschaften der Vulkanisate Einfluss hat, ist die Gruppe der Vulkanisationsbeschleuniger. Für die Vulkanisation von Kautschukmischungen, die für die Herstellung von Fahrzeugreifen Verwendung finden, stehen verschiedene, dem Fachmann bekannte, Vulkanisationsbeschleunigergruppen zur Verfügung, die auch in Kombination miteinander eingesetzt werden können, wobei sich synergistische Effekte ergeben können.

Die Vulkanisationsbeschleuniger dienen hierbei zur Aktivierung des als Vulkanisationsmittel eingesetzten Schwefels. Die Dosierung von Schwefel und Vulkanisationsbeschleuniger wird dabei individuell auf die zu erzielenden Eigenschaften der Reifenkautschukmischung angepasst. Diese zu erzielenden Eigenschaften werden durch das bei der Vulkanisation entstehende Netzwerk, z.B. zwischen Polymer und Füllstoffen, bedingt, so dass der Art und dem Grad der Vernetzung im Hinblick auf die physikalischen Eigenschaften der Vulkanisate große Bedeutung zugemessen werden kann.

Der Stand der Technik bezüglich Vulkanisations- bzw. Vernetzersystem soll nun anhand folgender Druckschriften näher beschrieben werden:
Die DE 25 36 674 A1 beschreibt eine silikatische Füllstoffe enthaltende vernetzbare Kautschukmischung und ein Verfahren zur Vernetzung. Hierbei wird sehr allgemein eine vernetzbare Kautschukmischung beansprucht, die mindestens 1 bis 300 Gewichtsteile eines silikatischen Füllstoffes, 0 bis 300 Gewichtsteile Ruß und mindestens einen an sich für die Kautschukvulkanisation bekannten Vulkanisationsbeschleuniger in Mengen von 0,02 bis 10 Gewichtsteilen und mindestens ein Organosilan enthält. Es findet keine Beanspruchung eines definierten Polymersystems statt, ebenso wie über die zu verwendenden Füllstoffe keine spezifizierenden Angaben gemacht werden.

Aus der DE 603 03 203 T2 sind ein als Vernetzungsmittel verwendbares Polysulfidsiloxan und sein Herstellungsverfahren bekannt. Das Vernetzungssystem umfasst hierbei das beschriebene Polysulfidsiloxan und mindestens einen primären Vulkanisationsbeschleuniger. Das Polysulfidsiloxan wird in einer Zusammensetzung auf der Basis eines Dienelastomers und eines verstärkenden Füllstoffes verwendet. Als Dienelastomer werden verschiedene Komponenten und als Füllstoffe insbesondere Kieselsäure und Ruß beansprucht, wobei sich die offenbarten Ausführungsbeispiele jeweils auf eine Kautschukmischung aus Naturkautschuk als einziges Polymer und Ruß als einzigen Füllstoff beziehen.

Die DE 42 07 028 A1, DE 40 36 420 A1 und DE 40 37 756 A1 offenbaren Vulkanisate für Schläuche, Dichtungen, Rollringe und weitere technische Gummiartikel ohne Nitrosamintoxizität, die vorzugsweise spezielle Thiuram- und / oder Mercaptovulkanisationsmittel enthalten, wobei zur Vulkanisation bzw. Vernetzung trotzdem noch meist geringe Mengen an elementarem Schwefel benötigt werden.

Aus der EP 0 530 590 B1 ist ein Verfahren zur Herstellung von Dienkautschuk-Vulkanisaten mit sehr hoher Alterungsstabilität und Reversionsbeständigkeit bekannt. Die Dienkautschuk-Vulkanisate enthalten hierbei 1 bis 2,5 Teile Mercaptobeschleuniger oder 0,2 bis 0,8 Teile Sulfenamidbeschleuniger oder 0,3bis 2,5 Teile Mercaptobeschleuniger und 0,1 bis 0,8 Teile Sulfenamidbeschleuniger. Pro 100 Teile Kautschuk, vorzugsweise eines ölverstreckten Dienkautschuks, werden noch 0,1 bis 0,2 Teile Schwefel eingesetzt.

Die EP 1 000 968 A beschäftigt sich ebenso wie die vorliegende Erfindung mit Kautschukmischungen, die einen verbesserten Abriebwiderstand aufweisen. Hierzu enthält die Kautschukmischung 20 bis 90 Gew.-Teile SSBR und/oder ESBR, 10 bis 50 Gew.-Teile BR, 0 bis 40 Gew.-Teile NR und/oder IR, 40 bis 90 Gew.-Teile Kieselsäure in Kombination mit einem Füllstoffaktivator und übliche Zusätze und ebenso ein Vulkanisiersystem aus a) 0,5 bis 3,5 Gew.-Teile einer Verbindung (I), die C₆-Dithioalkandiyl-Brücken liefert, β) 0,3 bis 1,5 Gew.-Teile Schwefel, γ) 1 bis 3 Gew.-Teile Benzothiazyl-2-cyclohexylsulfenamid und/oder N-tert.-Butyl-2-benzothiazylsulfenamid und δ) 0,5 bis 4 Gew.-Teile N,N'-Diphenylguanidin (DPG). Als Füllstoffaktivator wird TESPT offenbart.

Die EP 1 533 336 A beschreibt Kautschukmischungen, welche Mercaptosilane enthalten, die eine Inkubationszeit ähnlich der polysulfidischen Organosilane aufweisen und somit eine sichere Verarbeitbarkeit der Kautschukmischung gewährleisten sollen. Hierzu enthält die Kautschukmischung einen Kautschuk oder eine Mischung von Kautschuken, einen Füllstoff, ein Organosilan der allgemeinen Formel I, einen Thiurambeschleuniger und einen stickstoffhaltigen Co-Aktivator.

Der Erfindung liegt daher die Aufgabe zugrunde, eine Kautschukmischung bereitzustellen, die den vorgenannten Zielkonflikt löst oder zumindest entschärft, und zwar dadurch, dass sie das Abriebsverhalten bei nahezu gleichbleibenden weiteren physikalischen Eigenschaften durch ein optimiertes Vulkanisationssystem verbessert.

Gelöst wird diese Aufgabe durch eine Kautschukmischung für Anwendungen im PKW-Laufstreifen mit folgender Zusammensetzung:
- 30 bis 100 phr zumindest eines Dienkautschuks;
- 45 bis 200 phr zumindest eines Füllstoffs, wobei Kieselsäure als Füllstoff in Mengen von 45 bis 150 phr vorhanden ist;
- 0 bis 200 phr weitere Zusatzstoffe;
- ein Schwefelvulkanisationssystem enthaltend freien Schwefel, Schwefeldonor und Silan, , wobei das Silan ein S:Si- Verhältnis kleiner als 1,6 hat und die Anzahl der Si-Atome größer oder gleich 1 ist und ein Mw pro Si-Atom-Verhältnis kleiner als 390 g/mol besitzt, mit einer durch diese Bestandteile erzielten Schwefelkonzentration zwischen 0,035 bis 0,07 mhr, wobei der Anteil an freiem Schwefel 20 bis 50 % und der Anteil des Schwefeldonors 5 bis 20 % und der Anteil Silan 50 bis 70 % beträgt und
- 0,1 bis 10 phr zumindest Vulkanisationsbeschleunigers.

Es ist ebenfalls vorteilhaft, Zinkoxid und Stearinsäure als Vulkanisationsaktivatoren hinzuzufügen.

Die in dieser Schrift verwendete Angabe phr (parts per hundred parts of rubber by weight) ist dabei die in der Kautschukindustrie übliche Mengenangabe für Mischungsrezepturen. Die Dosierung der Gewichtsteile der einzelnen Substanzen wird dabei stets auf 100 Gewichtsteile der gesamten Masse aller in der Mischung vorhandenen Kautschuke bezogen. Die verwendete Angabe mhr bezieht sich entsprechend auf Mol-Angaben (mol per hundred parts of rubber by weight).

Überraschenderweise wurde herausgefunden, dass verbesserte Resultate auftreten, wenn das Vulkanisationssystem die oben genannten Hauptcharakteristika aufweist, nämlich die durch freien Schwefel, Silan und Schwefel-Donor zugeführte Schwefelgesamtmenge und das spezielle durch diese drei Schwefelquellen bedingte Schwefelverhältnis. Der Stand der Technik, z. B. für niedrige Schwefelgehalte, ist stellvertretend für weitere in den Vergleichsbeispielen angegeben, jedoch beinhalten diese Rezepturen in der Regel keine oder nur geringe Gehalte an Schwefel-Donor. Durch Hinzufügen der Schwefelzusammensetzung in der erfindungsgemäßen Weise kann eine überraschend gute Abriebleistung erzielt werden, während andere physikalische Eigenschaften auf gleichem Niveau verbleiben.

Dadurch ist es möglich den Zielkonflikt zwischen z.B. Rollwiderstand und Abrieb zu entkoppeln. Dies gilt nicht nur für den Fahrzeuglaufstreifen, sondern auch für weitere Reifenbauteile, wie z.B. die Seitenwand. Die Kautschukmischungen für die weiteren Reifenbauteile werden im Folgenden zusammengefasst, und wie in der Reifentechnologie üblich, auch als body compounds oder body-Mischungen bezeichnet.

Zumindest ein Dienkautschuk ist ausgewählt aus der Gruppe bestehend aus natürlichem Polyisopren und / oder synthetischem Polyisopren und / oder Polybutadien und / oder Styrol-Butadien-Copolymer und / oder lösungspolymerisiertem Styrol-Butadien-Copolymer und / oder emulsionspolymerisiertem Styrol-Butadien-Copolymer und / oder Styrol-Isopren-Butadien-Terpolymer und / oder Butadien-Isopren-Copolymer und / oder Butylkautschuk und / oder Halobutylkautschuk und / oder Ethylen-Propylen-DienKautschuk und / oder Chloropren-Kautschuk und / oder Butadien-Acrylnitril-Copolymer und / oder teilweise hydrierten Dien(co-)polymeren. Die Polymere können nicht funktionalisiert oder funktionalisiert sein, wobei ebenfalls Mischungen von funktionalisierten und nicht funktionalisierten Polymeren möglich sind.

Verschiedene Anwendungen im Reifen (Lauffläche/Body, PKW/LKW) sind mit jeweils unterschiedlichen bevorzugten Kautschukzusammensetzungen verbunden:

### PKW-Laufstreifen:

Die Kautschukmischung enthält bevorzugt zumindest einen Styrol-Butadien-Kautschuk (SBR, vorzugsweise einen lösungspolymerisierten Styrol-Butadien-Kautschuk (SSBR)).

### LKW-Laufstreifen:

Die Kautschukmischung enthält bevorzugt 40 bis 100 phr natürliches Polyisopren und / oder synthetisches Polyisopren, 0 bis 50 phr Butadienkautschuk, 0 bis 60 phr Styrol-Butadien-Kautschuk, vorzugsweise lösungspolymerisierten Styrol-Butadien-Kautschuk.

### Body:

Die Kautschukmischung enthält bevorzugt 20 bis 100 phr natürliches Polyisopren und / oder synthetisches Polyisopren, 0 bis 80 phr Butadienkautschuk, 0 bis 50 phr Styrol-Butadien-Kautschuk.

Die Kautschukmischung enthält 45 bis 200 phr zumindest eines Füllstoffs, wobei Kieselsäure als Füllstoff in Mengen von 45 bis 150 phr vorhanden ist.

Wird die Kautschukmischung im PKW-Laufstreifen verwendet, so beträgt die Füllstoffmenge bevorzugt 50 bis 200 phr, besonders bevorzugt 60 bis 150 phr, ganz besonders bevorzugt 45 bis 150 phr. Bei Verwendung in LKW-Laufstreifen beträgt die Füllstoffmenge bevorzugt 40 bis 70 phr und besonders bevorzugt 40 bis 55 phr, ganz besonders bevorzugt 20 bis 60 phr, während der Füllstoff für Anwendungen in Body-Mischungen bevorzugt 30 bis 80 phr, bevorzugt 10 bis 50 phr, beträgt.

In einer besonderen Ausführungsform sollten wenigstens 10 phr des Füllstoffs Silanreaktive Gruppen auf ihrer Oberfläche, wie OH-Gruppen, aufweisen. Dieser Füllstoff kann aus den bekannten Füllstoffen, wie amorphe Kieselsäure, anderen mineralischen Füllstoffen oder modifizierten Polymermikrogelen, z.B. Nanoprene® der Fa. LanXess, ausgewählt werden.

Die in der Reifenindustrie eingesetzten amorphen Kieselsäuren sind in der Regel gefällte Kieselsäuren, die insbesondere nach ihrer Oberfläche charakterisiert werden. Zur Charakterisierung wird dabei die Stickstoff-Oberfläche (BET) gemäß DIN 66131 und DIN 66132 als Maß für die innere und äußere Füllstoffoberfläche in m²/g angegeben.

Wird Kieselsäure als Hauptfüllstoff verwendet, so werden erfindungsgemäß Kieselsäuren mit einer Stickstoff-Oberfläche (BET) zwischen 100 und 300 m²/g, bevorzugt zwischen 120 und 250 m²/g und besonders bevorzugt zwischen 140 und 220 m²/g eingesetzt.

Wird Ruß als Hauptfüllstoff verwendet, so werden erfindungsgemäß Ruße mit einer Iod-Absorptionszahl, gemäß ASTM D 1510, von 80 bis 300 g/kg und einer DPB-Zahl von 115 bis 200 cm³/100 g eingesetzt. Die DBP-Zahl gemäß ASTM D 2414 bestimmt das spezifische Absorptionsvolumen eines Rußes oder eines hellen Füllstoffes mittels Dibutylphthalat.

Es ist allerdings auch möglich eine Kombination aus Kieselsäure mit den genannten Eigenschaften und Ruß mit den genannten Eigenschaften als wesentliche Füllstoffkomponente zu verwenden.

Die Kautschukmischung kann neben Kieselsäure und Ruß auch noch weitere Füllstoffe wie Aluminiumhydroxid, Schichtsilikate, Kalk, Kreide, Stärke, Magnesiumoxid, Titandioxid, Kautschukgele, Kurzfasern usw. in beliebigen Kombinationen enthalten. Zweckdienliche Silane als Teil des Vulkanisationssystems und deren Klassifizierung sind wie folgt:
Die in der Kautschukindustrie üblicherweise verwendeten Silane lassen sich durch das S:Si-Verhältnis im Molekül, die absolute Anzahl der Si-Atome in dem Molekül und das 'Mw-pro-Si-Atom'-Verhältnis klassifizieren:
Klasse 1:
   - S:Si > 1,6 und
   - Anzahl der Si-Atome > 1 und
   - Mw pro Si-Atom-Verhältnis < 390 g/mol;
   - Enthält z. B. Organosilane, welche in DE 25 36 674 A1 für x > 3 beschrieben sind und die z. B. durch Si69® (TESPT) von Fa. Evonik oder durch Silane, die in US 11/617 683, US 11/617 649, US 11/617 663 oder US 11/617 659 beschrieben werden, bevorzugt Silane mit verzweigten Kohlenwasserstoffkernen, welche in US 11/617 663 beschrieben werden (engl. "silated core silanes").
Klasse 2:
   - S:Si < 1,6 und
   - Anzahl der Si-Atome ≥ 1 und
   - Mw pro Si-Atom-Verhältnis < 390 g/mol;
   - enthält z. B. Organosilane, welche in DE 25 36 674 A1 für x < 3 beschrieben sind und die z. B. durch Si75® (TESPD) von Fa. Evonik oder durch Silane, die in US 11/617 683, US 11/617 649, US 11/617 663, US 11/617 659 beschrieben werden, oder NXT, NXT mit niedrigem VOC-Gehalt oder NXT-Z-Typen von Momentive Performance Materials Inc..
Klasse 3:
   - S:Si offen, d.h. das Verhältnis kann jeden positiven Wert annehmen, und
   - absolute Anzahl der Si-Atome ≥ 1 und
   - Mw pro Si-Atom-Verhältnis > 390 g/mol;
   - enthält z. B. Silane, welche in US20060161015, WO2008009514, US 11/617 678 beschrieben werden und die z.B. unter dem Handelsnamen Si363® von Fa. Evonik erhältlich sind.

Silane, welche aus Klasse 2ausgewählt sind, werden in dem Vulkanisationssystem der erfindungsgemäßen Kautschukmischung eingesetzt.

Schwefeldonoren, enthaltend Vernetzungsmittel, die Schwefel an das Netzwerk abgeben, sind der fachkundigen Person bekannt oder z. B. in Hofmann & Gupta: Handbuch der Kautschuktechnologie, Gupta-Verlag (2001), Kapitel 7, beschrieben.

Bevorzugt sind Thiuramdisulfide, bevorzugt TBzTD, oder Dithiophosphate, wie z.B. DipDis (Bis-(Diisopropyl)thiophosphoryldisulfid), SDT (z. B. Rhenocure SDT 50®, Rheinchemie GmbH), Zinkdichloryldithiophosphat (ZDT) (z. B. Rhenocure ZDT/S®, Rheinchemie GmbH).

Der Mengenanteil an Vulkanisationsbeschleuniger beträgt 0,1 bis 10 phr, bevorzugt 1 bis 6 phr, wobei zumindest ein Vulkanisationsbeschleuniger ausgewählt ist aus der Gruppe, bestehend aus Thiazol-Beschleuniger, Mercapto-Beschleuniger, SulfenamidBeschleuniger, Guanidin-Beschleuniger, Thiuram-Beschleuniger, Dithiocarbamat-Beschleuniger, Amin-Beschleuniger, Thioharnstoffe und/oder andere Beschleuniger, wobei jene ausgenommen sind, die als Schwefeldonoren dienen.

Vorzugsweise wird mindestens ein Beschleuniger aus der Gruppe der SulfenamidBeschleuniger gewählt, wobei bevorzugt N-tert-Butyl-2-benzothiazolsulfenamid (TBBS) oder Cyclohexylbenzothiazolsulfenamid (CBS) Verwendung finden.

Bevorzugt ist ein Molverhältnis Schwefeldonor/Sulfenamid von 0,35 bis 0,6, vorzugsweise von 0,45 bis 0,55.

Darüber hinaus wird freier Schwefel wie definiert zugesetzt.

Die weiteren Zusatzstoffe weisen üblicherweise einen Gesamtmengenanteil von 0 bis 200 phr auf. Die weiteren Zusatzstoffe beinhalten z. B. weitere Vulkanisationshilfsmittel, abgesehen von Beschleunigern, Schwefeldonoren und Schwefel, die der fachkundigen Person auf diesem Gebiet bekannt sind, wie z. B. ZnO, Stearinsäure, Harze etc. Weitere Zusatzstoffe schließt einen oder mehrere Verarbeitungshilfsstoffe, einen oder mehrere Weichmacher, ein oder mehrere Ozonschutzmittel und ein oder mehrere Alterungsschutzmittel ein. Gegebenenfalls können noch weitere Zusatzstoffe beigemischt sein, die dem allgemeinen Stand der Kautschukmischungstechnologie entsprechen.

In den Zusatzstoffen sind weiterhin 0 bis 120 phr zumindest eines Weichmacheröls enthalten, wobei das Weichmacheröl ein Mineralöl ist, das ausgewählt ist aus der Gruppe, bestehend aus DAE (Destillated Aromatic Extracts) und / oder RAE (Residual Aromatic Extract) und / oder TDAE (Treated Destillated Aromatic Extracts) und / oder MES (Mild Extracted Solvents) und / oder naphtenische Öle.

Es können in der Kautschukmischung noch 0 - 80 phr zumindest eines weiteren zusätzlichen Weichmachers vorhanden sein. Dieser weitere Weichmacher kann ein synthetischer Weichmacher und / oder eine Fettsäure und / oder ein Fettsäurederivat und / oder ein Harz und / oder ein Faktis und/oder ein Polymer mit niedrigem Molekulargewicht und/oder ein Pflanzenöl sein.

Die erfindungsgemäße Kautschukmischung findet zur Herstellung eines Reifens Verwendung. Dies kann ein Vollgummireifen, aber auch ein Fahrzeugluftreifen sein. Besonderer Einsatzschwerpunkt ist hier die Verwendung im Laufstreifen eines Fahrzeugluftreifens und in einer Body-Mischung eines Fahrzeugluftreifens. Der Begriff Body-Mischung beinhaltet hierbei Seitenwand, Innenseele, Apex, Gürtel, Schulter, Gürtelprofil, Squeege, Karkasse, Wulstverstärker und / oder Bandage.

Die erfindungsgemäße Kautschukmischung findet nicht nur Anwendung in den verschiedenen Bereichen innerhalb eines Reifens, sondern auch für Schläuche, Luftfedern, Gummidämpfer, Riemen und Gurte.

Die Herstellung der Kautschukmischung erfolgt nach dem in der Kautschukindustrie üblichen Verfahren, bei dem zunächst in ein oder mehreren Mischstufen eine Grundmischung mit allen Bestandteilen außer dem Vulkanisationssystem (Schwefel und vulkanisationsbeeinflussende Substanzen) hergestellt wird. Durch Zugabe des Vulkanisationssystems in einer letzten Mischstufe wird die Fertigmischung erzeugt. Die Fertigmischung wird z.B. durch einen Extrusionsvorgang weiterverarbeitet und in die entsprechende Form gebracht.

Zur Verwendung in Fahrzeugluftreifen wird die Mischung bevorzugt in die Form eines Laufstreifens gebracht und bei der Herstellung des Fahrzeugreifenrohlings wie bekannt aufgebracht. Der Laufstreifen, der zweigeteilt sein kann, kann aber auch in Form eines schmalen Kautschukmischungsstreifens auf einen Reifenrohling aufgewickelt werden. Die Herstellung der erfindungsgemäßen Kautschukmischung zur Verwendung als Body-Mischung in Fahrzeugreifen erfolgt wie bereits für den Laufstreifen beschrieben. Der Unterschied liegt in der Formgebung nach dem Extrusionsvorgang. Die so erhaltenen Formen der erfindungsgemäßen Kautschukmischung für eine oder mehrere unterschiedliche Body-Mischungen dienen dann dem Aufbau eines Reifenrohlings. Zur Verwendung der erfindungsgemäßen Kautschukmischung in Riemen und Gurten, insbesondere in Fördergurten, wird die extrudierte Mischung in die entsprechende Form gebracht und dabei oder nachher häufig mit Festigkeitsträgern, z.B. synthetische Fasern oder Stahlcorde, versehen. Zumeist ergibt sich so ein mehrlagiger Aufbau, bestehend aus einer und / oder mehrerer Lagen Kautschukmischung, einer und / oder mehrerer Lagen gleicher und / oder verschiedener Festigkeitsträger und einer und / oder mehreren weiteren Lagen dergleichen und / oder einer anderen Kautschukmischung.

Die Erfindung soll nun anhand von Vergleichs- und Ausführungsbeispielen, die in den Tabellen 1 bis 11 zusammengefasst sind, näher erläutert werden. Die Tabellen sind jeweils mindestens dreigeteilt. Der erste Teil stellt die jeweilige Mischungszusammensetzung dar, während der zweite Teil die Schwefelquellen detaillierter beschreibt und im dritten Teil die Testergebnisse an Prüfkörpern dargestellt werden. Beispiele mit dem Anfangsbuchstaben C sind jeweils Vergleichsbeispiele, während Beispiele mit dem Anfangsbuchstaben E erfindungsgemäße Beispiele darstellen. Die Tabellen 1 und 2 beinhalten in einem zusätzlichen vierten Teil Reifentestergebnisse.

Alle Mischungsbeispiele wurden in einem "OOC" BANBURY®-(Farrell Corp.)-Mischer mit einem Kammervolumen von 158 in³ (2600 cm³) in einem drei-schrittigen Verfahren gemischt.

Aus sämtlichen Mischungen wurden Prüfkörper durch eine 20minütige Vulkanisation bei 160°C hergestellt und mit diesen Prüfkörpern für die Kautschukindustrie typische Materialeigenschaften bestimmt.

Für die obig beschriebenen Tests an Prüfkörpern wurden folgende Testverfahren angewandt:
- Shore-A-Härte bei Raumtemperatur und 70 °C gemäß DIN 53 505
- Rückprallelastizität bei Raumtemperatur und 70 °C gemäß DIN 53 512
- Zugfestigkeit bei Raumtemperatur gemäß DIN 53 504
- Reißdehnung bei Raumtemperatur gemäß DIN 53 504
- Spannungswerte (Modul) bei 50%, 100% und 300% statischer Dehnung bei Raumtemperatur gemäß DIN 53 504
- Abriebswerte gemäß DIN 53 516
- Relativer Vernetzungsgrad von 10% , 40%, 90% und 95% mittels rotorlosem Vulkameter (MDR = Moving Disc Rheometer) gemäß DIN 53 529
- Mooney-Viskosität gemäß ASTM D1646

Der Wert für den Abrieb wird im Labormaßstab in relativen (%) oder absoluten (mm³) Zahlen angegeben, wobei dieses den Gewichtsverlust während des Testsdarstellen. Niedrigere Werte bedeuten daher eine Verbesserung des Abriebverhaltens.

Ferner wurden Fahrzeugluftreifen der Dimension 205/55 R16 mit einem Laufstreifen aus den jeweiligen Mischungen hergestellt und mit den Reifen Versuche zum Nassbremsen auf Asphalt (low µ) und Beton (high µ) sowie zum Aquaplaning als auch zum Rollwiderstand durchgeführt. Ferner wurde der Abrieb gemessen. Die Reifeneigenschaften des Reifens mit der Mischungen C1 bzw. C2 wurden gleich 100 gesetzt, Werte größer als 100 bedeuten für die erfindungsgemäßen Mischungen eine Verbesserung in der entsprechenden Eigenschaft.

Die Vergleichs- und Ausführungsbeispielen berücksichtigen unterschiedliche Mischungszusammensetzungen in Abhängigkeit der Silanklasse und der jeweiligen Anwendung im Reifen.

### Quantitative Zusammensetzung:

- 30 bis 100 phr ungesättigter Kautschuk (z. B. für PKW-Reifenlauffläche: SBR/BR 0-50 phr; NR 0 bis 50 phr, bevorzugt 0 bis 30 phr, besonders bevorzugt 0 bis 20 phr);
- alle zusätzlichen Füllstoffe ohne OH-Gruppen können verwendet werden (z.B. 0 bis 100 phr, bevorzugt 0 bis 80 phr, besonders bevorzugt 0 bis 5 phr, Ruß);
- 0 bis 120 phr Weichmacher, bevorzugt 0 bis 90 phr, besonders bevorzugt 0 bis 80 phr;
- 0 bis 60 phr weitere Zusatzstoffe, bevorzugt 0-40 phr (Ozonschutzwachse, Harze, ZnO, Alterungsschutzmittel etc.).

### Zusätzliche Merkmale:

- Die Kautschukmischung beinhaltet weiterhin einen Sulfenamidbeschleuniger, vorzugsweise CBS oder TBBS, besonders bevorzugt in einem Schwefeldonor-zu-Sulfenamidbeschleuniger-Molverhältnis von 0,35 bis 0,6, vorzugsweise 0,45 bis 0,55;
- Schwefeldonoren sind Thiuramdisulfide oder Thiophosphate, bevorzugt TBzTD oder SDT oder DipDis oder ZDT;
- Silane sind TESPT oder TESPD, wie zum Beispiel Si69® und Si75®, erhältlich bei Evonik Industries AG, oder Mercaptosilane, die geblockt oder ungeblockt sein können, wie zum Beispiel Si363® von Evonik Industries AG oder Silane vom NXT-Typ, Silane vom NXT-Z-Typ, Silane vom NXT-Typ mit niedrigem VOC-Gehalt (alle erhältlich bei Momentive Performance Materials Inc.) oder Silane mit verzweigten Kohlenwasserstoffkernen.
- Zumindest einen Füllstoff, der vorzugsweise OH-Gruppen auf der Füllstoffoberfläche aufweist, wie Kieselsäure, andere Metalloxide oder Mikrogele wie Nanoprene®, wobei der Füllstoff besonders bevorzugt 1-6 OH-Gruppen pro nm² besitzt;
- Ungesättigte Elastomere beinhaltet SBR, BR, NR, IR, SIR, SIBR, IBR, EPDM oder Mischungen davon.
- Weichmacher beinhaltet Mineralöle, Pflanzenöle, Ester, flüssige Polymere mit niedrigem Molekulargewicht oder Verschnitte davon.

### Beispiele für PKW-Laufstreifen-Anwendungen sind:

Beispiele E1, E2, E4 bis E11, E16, E20 bis E23:
Schwefelkonzentration: 0,05 bis 0,075 mhr und
Freier Schwefel: 0 bis 10 %, bevorzugt 0 bis 2 % und
Schwefeldonor: 5 bis 13 %, bevorzugt 7 bis 13 % und
Silan der Klasse 1: 75 bis 90 % und
Kieselsäure: bevorzugt 45 bis 150 phr.

Erfindungsgemäße Beispiele E3, E12 bis E15, E17, E24 bis E26:
Schwefelkonzentration: 0,035 bis 0,07 mhr und
Freier Schwefel: 20 bis 50 %, bevorzugt 24 bis 45 % und
Schwefeldonor: 5 bis 20 %, bevorzugt bis 18 % und
Silan der Klasse 2: 50 bis 70 % und
Kieselsäure: bevorzugt 45 bis 150 phr.

Beispiele E18 und E19:
Schwefelkonzentration: 0,025 bis 0,05 mhr und
Freier Schwefel: 20 bis 60 %, bevorzugt 25 bis 50 % und
Schwefeldonor: 10 bis 30 %, bevorzugt 15 bis 28 % und
Silan der Klasse 3: 25 bis 70 % und Kieselsäure: bevorzugt 45 bis 150 phr.

### Beispiele für Reifen-Seitenwand-Anwendungen sind:

Beispiele E27 bis E28:
Schwefelkonzentration: 0,025 bis 0,05 mhr und
Freier Schwefel: 0 bis 55 % und
Schwefeldonor: 8 bis 20 % und
Silan der Klasse 1: 40 bis 95 %
Kieselsäure: bevorzugt 10 bis 50 phr.

### Beispiele für LKW-Laufstreifen-Anwendungen sind:

Beispiele E31 bis E38:
Schwefelkonzentration 0,025 bis 0,05 mhr und
Freier Schwefel 0 bis 55 % und
Schwefeldonor 8 bis 15 % und
Silan der Klasse 1: 40 bis 95 % und
Kieselsäure: bevorzugt 20 bis 70 phr.

**TABELLE 1**

| **Zusammensetzung** | | **C1** | **E1** |
|---|---|---|---|
| NR | phr | 20,000 | 20,000 |
| BR | phr | 35,000 | 35,000 |
| SSBR | phr | 45,000 | 45,000 |
| Kieselsäure (VN3) | phr | 85,000 | 85,000 |
| Weichmacher | phr | 45,000 | 45,000 |
| 6PPD | phr | 2,000 | 2,000 |
| TMQ | phr | 2,000 | 2,000 |
| Ozonschutzwachs | phr | 2,000 | 2,000 |
| ZnO | phr | 2,500 | 2,500 |
| Stearinsäure | phr | 2,500 | 2,500 |
| Silan-TESPT | phr | 6,754 | 6,754 |
| | | | |
| TBZTD | phr | - | 2,000 |
| DPG | phr | 2,000 | - |
| TBBS | phr | - | 1,810 |
| CBS | phr | 2,000 | - |
| Schwefel | phr | 1,500 | - |
| | | | |

| **Schwefelquelle** | | **C1** | **E1** |
|---|---|---|---|
| Gesamter Schwefel | mmol/phr | 97,8 | 58,1 |
| Freier Schwefel | Prozent | 48,3 | 0,0 |
| Schwefeldonor | Prozent | 0,0 | 12,8 |
| Silan | Prozent | 51,7 | 87,2 |

| **Physikalische Eigenschaften** | | **C1** | **E1** |
|---|---|---|---|
| T-010 | Min | 2,85 | 2,09 |
| T-040 | Min | 6,02 | 3,94 |
| T-090 | Min | 13,65 | 9,78 |
| T-095 | Min | 18,07 | 12,70 |
| Δ Drehmoment | dNm | 14,49 | 16,22 |
| Mooney-Viskosität @ 100 °C | Mooney-Einheiten | 43 | 43,1 |
| Härte @ RT | Shore A | 56 | 58 |
| Härte @ 70 °C | Shore A | 53 | 56 |
| Modul 50 % | MPa | 0,89 | 1,03 |
| Modul 100 % | MPa | 1,54 | 1,91 |
| Modul 300 % | MPa | 5,84 | 7,73 |
| Zugfestigkeit | MPa | 14,9 | 14,5 |
| Reißdehnung | Prozent | 640 | 500 |
| Rückprall @ RT | Prozent | 37 | 43 |
| Rückprall @ 70 °C | Prozent | 51 | 55 |
| Δ-Rückprall | Prozent | 14 | 13 |
| Abrieb | mm³ | 85,52 | 45,97 |
| | | | |

| **Reifentest** | **Kritische Differenz [%]** | **C1** | **E1** |
|---|---|---|---|
| ABS - Naßbremsen (hohes µ) | 1 | 100 | 99,5 |
| Trockenbremsleistung | 1 | 100 | 100,7 |
| Trocken-Handling | 0,5 | 100 | 102,4 |
| Aquaplaning | 3,7 | 100 | 100 |
| Rollwiderstand | 3,12 | 100 | 102,2 |
| Abrieb | 5 | 100 | 137 |

**TABELLE 2**

| **Silanklasse** | | **C2** | **E2 Klasse 1** | **E3 Klasse 2** | **E4 Klasse 1** | **C3** |
|---|---|---|---|---|---|---|
| **Zusammensetzung** | | | | | | |
| NR | phr | 30,00 | 30,00 | 30,00 | 30,00 | 30,00 |
| SSBR | phr | 70,00 | 70,00 | 70,00 | 70,00 | 70,00 |
| Ruß, N339 | phr | 5,00 | 5,00 | 5,00 | 5,00 | 5,00 |
| Kieselsäure (VN3) | phr | 86,00 | 86,00 | 86,00 | 86,00 | 86,00 |
| Weichmacher | phr | 25,00 | 25,00 | 25,00 | 25,00 | 25,00 |
| Alterungsschutzmittel | phr | 4,00 | 4,00 | 4,00 | 4,00 | 4,00 |
| Ozonschutzwachs | phr | 2,50 | 2,50 | 2,50 | 2,50 | 2,50 |
| Zinkoxid | phr | 2,00 | 2,00 | 2,00 | 2,00 | 2,00 |
| Stearinsäure | phr | 1,00 | 1,00 | 1,00 | 1,00 | 1,00 |
| Fettsäureester & Zn-Seifen | phr | 4,00 | 4,00 | 4,00 | 4,00 | 4,00 |
| TESPT-Silan | phr | - | 8,34 | - | - | - |
| TESPD-Silan | phr | 8,00 | - | 8,00 | - | 8,00 |
| Silan mit verzweigtem Kohlenwasserstoffkern | phr | | | | 7,70 | |
| | | | | | | |
| TBZTD | phr | - | 1,75 | 1,75 | 1,75 | - |
| DPG | phr | 2,00 | - | - | - | 2,00 |
| TBBS | phr | - | 1,58 | 1,58 | 1,58 | - |
| CBS | phr | 2,00 | - | - | - | 4,00 |
| Schwefel | phr | 1,70 | 0,03 | 0,42 | 0,03 | 0,85 |

| **Physikalische Eigenschaften** | | **C2** | **E2** | **E3** | **E4** | **C3** |
|---|---|---|---|---|---|---|
| T-010 | Min | 2,75 | 1,40 | 1,18 | 1,46 | 0,68 |
| T-040 | Min | 5,42 | 4,35 | 4,32 | 4,32 | 3,29 |
| T-090 | Min | 14,76 | 19,26 | 20,20 | 19,29 | 18,46 |
| T-095 | Min | 19,74 | 23,52 | 24,36 | 23,59 | 23,22 |
| Δ Drehmoment | dNm | 20,73 | 21,01 | 18,92 | 20,44 | 18,03 |
| Mooney-Viskosität @ 100 °C | Mooney-Einheiten | 56 | 74 | 62 | 76 | 54 |
| Härte @ RT | Shore A | 69 | 70 | 68 | 70 | 71 |
| Härte @ 70 °C | Shore A | 62 | 62 | 57 | 61 | 61 |
| Modul 50 % | MPa | 1,40 | 1,45 | 1,18 | 1,31 | 1.32 |
| Modul 100 % | MPa | 2,48 | 2,58 | 1,82 | 2,22 | 2,27 |
| Modul 300 % | MPa | 10,39 | 11,44 | 7,18 | 9,82 | 9,59 |
| Zugfestigkeit | MPa | 15,3 | 14,1 | 13,0 | 14,3 | 16,5 |
| Reißdehnung | Prozent | 441 | 382 | 501 | 431 | 501 |
| Rückprall @ RT | Prozent | 24 | 26 | 23 | 26 | 24 |
| Rückprall @ 70 °C | Prozent | 47 | 49 | 42 | 47 | 44 |
| | | | | | | |

| **Schwefelquelle** | | **C2** | **E2** | **E3** | **E4** | **C3** |
|---|---|---|---|---|---|---|
| Gesamter Schwefel | mmol/phr | 86,5 | 70,1 | 52,9 | 70,1 | 59,9 |
| Freier Schwefel | Prozent | 61,1 | 1,4 | 24,6 | 1,4 | 44,0 |
| Schwefeldonor | Prozent | 0,0 | 9,3 | 12,1 | 9,3 | 0,0 |
| Silan | Prozent | 38,9 | 89,4 | 63,3 | 89,4 | 56,0 |

| **Reifentest** | | **C2** | **E2** | **E3** | **E4** | **C3** |
|---|---|---|---|---|---|---|
| Naß-ABS, Asphalt mit niedrigem µ | Krit. Dif. 1,0 % | 100 | 99,7 | 105,1 | 102,9 | 103,8 |
| Handling - Ranking | Niedrigere # ist besser | 4 | 5 | 3 | 1 | 2 |
| Trocken-Brems-ABS | Krit. Dif. 1,6 % | 100 | 98,8 | 99,6 | 99,7 | 100,3 |
| RR (90 km/h) | Krit. Dif. 3,03 % | 100 | 103,5 | 101,5 | 104,0 | 95,0 |
| Abrieb (ABC), vorne | T₍ₘᵢₜₜₑₗ₎ = 17 °C | 100 | 127 | 140 | 140 | 112 |
| Abrieb (ABC), hinten | T₍ₘᵢₜₜₑₗ₎ = 17 °C | 100 | 150 | 170 | 176 | 122 |

**TABELLE 3**

| **Zusammensetzung** | | **C2** | **E8** | **E5** | **E6** | **E7** |
|---|---|---|---|---|---|---|
| NR | phr | 30,00 | 30,00 | 30,00 | 30,00 | 30,00 |
| SSBR | phr | 70,00 | 70,00 | 70,00 | 70,00 | 70,00 |
| Ruß, N 339 | phr | 5,00 | 5,00 | 5,00 | 5,00 | 5,00 |
| Kieselsäure (VN3) | phr | 86,00 | 86,00 | 86,00 | 86,00 | 86,00 |
| Weichmacher | phr | 25,00 | 25,00 | 25,00 | 25,00 | 25,00 |
| Alterungsschutzmittel | phr | 4,00 | 4,00 | 4,00 | 4,00 | 4,00 |
| Ozonschutzwachs | phr | 2,50 | 2,50 | 2,50 | 2,50 | 2,50 |
| Zinkoxid | phr | 2,00 | 2,00 | 2,00 | 2,00 | 2,00 |
| Stearinsäure | phr | 1,00 | 1,00 | 1,00 | 1,00 | 1,00 |
| Fettsäureester & Zn-Seifen | phr | 4,00 | 4,00 | 4,00 | 4,00 | 4,00 |
| TESPT-Silan | phr | - | 8,34 | 7,80 | 7,25 | 6,71 |
| TESPD-Silan | phr | 8,00 | - | - | - | - |
| | | | | | | |
| TBZTD | phr | - | 2,00 | 2,00 | 2,00 | 2,00 |
| DPG | phr | 2,00 | - | - | - | - |
| TBBS | phr | - | 1,81 | 1,81 | 1,81 | 1,81 |
| CBS | phr | 2,00 | - | - | - | - |
| Schwefel | phr | 1,70 | - | 0,06 | 0,13 | 0,19 |
| | | | | | | |

| **Schwefelquelle** | | **C2** | **E8** | **E5** | **E6** | **E7** |
|---|---|---|---|---|---|---|
| Gesamter Schwefel | mmol/phr | 86,5 | 70,1 | 67,9 | 65,9 | 63,7 |
| Freier Schwefel | Prozent | 61,1 | 0,0 | 2,8 | 6,2 | 9,4 |
| Schwefeldonor | Prozent | 0,0 | 10,6 | 10,9 | 11,3 | 11,6 |
| Silan | Prozent | 38,9 | 89,4 | 86,3 | 82,5 | 79,0 |

| **Physikalische Eigenschaften** | | **C2** | **E8** | **E5** | **E6** | **E7** |
|---|---|---|---|---|---|---|
| T-010 | Min | 2,75 | 1,40 | 1,39 | 1,39 | 1,42 |
| T-040 | Min | 5,42 | 4,35 | 4,16 | 3,97 | 3,83 |
| T-090 | Min | 14,76 | 19,26 | 19,26 | 18,73 | 18,32 |
| T-095 | Min | 19,74 | 23,52 | 23,51 | 23,05 | 22,84 |
| Δ Drehmoment | dNm | 20,73 | 21,01 | 20,51 | 20,26 | 20,19 |
| Mooney- Viskosität @ 100 °C | Mooney-Einheiten | 44,4 | 50,9 | 52,9 | 55,3 | 57,5 |
| Härte @ RT | Shore A | 70 | 72 | 72 | 72 | 71 |
| Härte @ 70 °C | Shore A | 64 | 67 | 68 | 67 | 65 |
| Modul 50 % | MPa | 1,40 | 1,55 | 1,53 | 1,52 | 1,50 |
| Modul 100 % | MPa | 2,40 | 2,73 | 2,66 | 2,65 | 2,57 |
| Modul 300 % | MPa | 10,25 | 12,19 | 11,94 | 11,77 | 11,62 |
| Zugfestigkeit | MPa | 14,7 | 12,7 | 13,7 | 15,1 | 13,9 |
| Reißdehnung | Prozent | 439 | 338 | 365 | 399 | 377 |
| Rückprall @ RT | Prozent | 28 | 30 | 31 | 30 | 31 |
| Rückprall @ 70 °C | Prozent | 43 | 46 | 46 | 47 | 46 |
| Abrieb | % | 100,00 | 94,78 | 91,89 | 95,68 | 97,31 |

**TABELLE 4**

| **Zusammensetzung** | | **C2** | **E8** | **E9** | **E10** | **E11** |
|---|---|---|---|---|---|---|
| TSR | phr | 30,00 | 30,00 | 30,00 | 30,00 | 30,00 |
| SSBR | phr | 70,00 | 70,00 | 70,00 | 70,00 | 70,00 |
| Ruß, N 339 | phr | 5,00 | 5,00 | 5,00 | 5,00 | 5,00 |
| Kieselsäure (VN3) | phr | 86,00 | 86,00 | 86,00 | 86,00 | 86,00 |
| Weichmacher | phr | 25,00 | 25,00 | 25,00 | 25,00 | 25,00 |
| Alterungsschutzmit-tel | phr | 4,00 | 4,00 | 4,00 | 4,00 | 4,00 |
| Ozonschutzwachs | phr | 2,50 | 2,50 | 2,50 | 2,50 | 2,50 |
| Zinkoxid | phr | 2,00 | 2,00 | 2,00 | 2,00 | 2,00 |
| Stearinsäure | phr | 1,00 | 1,00 | 1,00 | 1,00 | 1,00 |
| Fettsäureester & Zn-Seifen | phr | 4,00 | 4,00 | 4,00 | 4,00 | 4,00 |
| TESPT -Silan | phr | - | 8,34 | 8,34 | 8,34 | - |
| TESPD-Silan | phr | 8,00 | - | - | - | - |
| Silan mit verzweig-tem Kohlenwassers-toffkern | phr | - | - | - | - | 7,70 |
| | | | | | | |
| TBZTD | phr | - | 2,00 | 1,45 | 1,75 | 1,75 |
| DPG | phr | 2,00 | - | - | - | - |
| TBBS | phr | - | 1,81 | 1,31 | 1,58 | 1,58 |
| CBS | phr | 2,00 | - | - | - | - |
| Schwefel | phr | 1,70 | - | 0,07 | 0,03 | 0,03 |
| | | | | | | |

| **Schwefelquelle** | | **C2** | **E8** | **E9** | **E10** | **E11** |
|---|---|---|---|---|---|---|
| Gesamter Schwefel | mmol/phr | 86,5 | 70,1 | 70,2 | 70,1 | 70,1 |
| Freier Schwefel | Prozent | 61,1 | 0,0 | 3,1 | 1,4 | 1,4 |
| Schwefeldonor | Prozent | 0,0 | 10,6 | 7,7 | 9,1 | 9,1 |
| Silan | Prozent | 38,9 | 89,4 | 89,2 | 89,4 | 89,4 |

| **Physikalische Eigenschaften** | | **C2** | **E8** | **E9** | **E10** | **E11** |
|---|---|---|---|---|---|---|
| T-010 | Min | 2,75 | 1,40 | 1,18 | 1,46 | 0,68 |
| T-040 | Min | 5,42 | 4,35 | 4,32 | 4,32 | 3,29 |
| T-090 | Min | 14,76 | 19,26 | 20,20 | 19,29 | 18,46 |
| T-095 | Min | 19,74 | 23,52 | 24,36 | 23,59 | 23,22 |
| Δ Drehmoment | dNm | 20,73 | 21,01 | 18,92 | 20,44 | 18,03 |
| Mooney- Viskosität @ 100 °C | Mooney-Einheiten | 44,4 | 50,9 | 52,9 | 51 | 53,8 |
| Härte @ RT | Shore A | 70 | 72 | 70 | 70 | 71 |
| Härte @ 70 °C | Shore A | 64 | 67 | 64 | 65 | 65 |
| Modul 50 % | MPa | 1,40 | 1,55 | 1,39 | 1,47 | 1,43 |
| Modul 100 % | MPa | 2,40 | 2,73 | 2,30 | 2,53 | 2,36 |
| Modul 300 % | MPa | 10,25 | 12,19 | 10,01 | 11,22 | 10,56 |
| Zugfestigkeit | MPa | 14,73 | 12,67 | 13,51 | 12,34 | 14,03 |
| Reißdehnung | Prozent | 439 | 338 | 412 | 352 | 407 |
| Rückprall @ RT | Prozent | 28 | 30 | 30 | 30 | 29 |
| Rückprall @ 70 °C | Prozent | 43 | 46 | 46 | 47 | 46 |
| Abrieb | mm³ | 100,00 | 94,89 | 80,29 | 89,30 | 82,86 |

**TABELLE 5**

| **Zusammensetzung** | | **C4** | **E12** | **E13** | **E14** | **E15** |
|---|---|---|---|---|---|---|
| NR | phr | 30,00 | 30,00 | 30,00 | 30,00 | 30,00 |
| SSBR | phr | 70,00 | 70,00 | 70,00 | 70,00 | 70,00 |
| Ruß, N 339 | phr | 5,00 | 5,00 | 5,00 | 5,00 | 5,00 |
| Kieselsäure (VN3) | phr | 86,00 | 86,00 | 86,00 | 86,00 | 86,00 |
| Weichmacher | phr | 25,00 | 25,00 | 25,00 | 25,00 | 25,00 |
| Alterungsschutzmittel | phr | 5,2 | 5,2 | 5,2 | 5,2 | 5,2 |
| Ozonschutzwachs | phr | 2,0 | 2,0 | 2,0 | 2,0 | 2,0 |
| ZnO | phr | 2,0 | 2,0 | 2,0 | 2,0 | 2,0 |
| Stearinsäure | phr | 1,0 | 1,0 | 1,0 | 1,0 | 1,0 |
| Fettsäureester | phr | 4,0 | 4,0 | 4,0 | 4,0 | 4,0 |
| Silan-TESPD | phr | 8,0 | 8,0 | 8,0 | 8,0 | 80 |
| | | | | | | |
| Schwefel | phr | 1,7 | 0,85 | 0,85 | 0,42 | 0,42 |
| TBzTD | phr | - | 1,75 | 1,75 | 2,00 | 2,75 |
| TBBS | phr | - | 1,58 | 1,58 | 1,81 | 1,58 |
| CBS | phr | 2,0 | - | - | - | - |
| DPG | phr | 2,0 | - | 2,5 | 2,5 | 2,5 |
| | | | | | | |

| **Schwefelquelle** | | **C4** | **E12** | **E13** | **E14** | **E15** |
|---|---|---|---|---|---|---|
| Gesamter Schwefel | mmol/phr | 86,5 | 66,3 | 66,3 | 53,8 | 56,6 |
| Freier Schwefel | Prozent | 61,4 | 40,0 | 40,0 | 24,4 | 23,2 |
| Schwefeldonor | Prozent | 0 | 9,7 | 9,7 | 13,7 | 17,9 |
| Silan | Prozent | 38,5 | 50,3 | 50,3 | 61,9 | 58,9 |

| **Physikalische Eigenschaften** | | **C4** | **E12** | **E13** | **E14** | **E15** |
|---|---|---|---|---|---|---|
| T-010 | Min | 1,98 | 2,77 | 2,29 | 2,48 | 2,15 |
| T-040 | Min | 3,21 | 4,55 | 3,35 | 4,28 | 3,83 |
| T-090 | Min | 8,40 | 11,94 | 6,84 | 8,66 | 8,10 |
| T-095 | Min | 11,43 | 16,43 | 9,54 | 11,05 | 10,50 |
| Δ Drehmoment | dNm | 19,27 | 21,75 | 20,08 | 19,19 | 20,51 |
| Mooney- Viskosität @ 100 °C | Mooney-Einheiten | 66,00 | 65,00 | 54,80 | 58,20 | 58,50 |
| Härte @ RT | Shore A | 67,80 | 70,40 | 70,60 | 69,90 | 70,75 |
| Härte @ 70 °C | Shore A | 64,60 | 67,40 | 68,05 | 66,45 | 68,05 |
| Modul 50 % | MPa | 1,40 | 1,60 | 1,60 | 1,50 | 1,61 |
| Modul 100 % | MPa | 2,48 | 2,82 | 2,93 | 2,64 | 2,92 |
| Modul 300 % | MPa | 10,39 | 10,61 | 11,36 | 10,26 | 11,06 |
| Zugfestigkeit | MPa | 15,30 | 13,20 | 12,55 | 13,55 | 13,74 |
| Reißdehnung | Prozent | 441,00 | 388,38 | 353,53 | 405,28 | 388,15 |
| Rückprall @ RT | Prozent | 24,20 | 24,90 | 25,90 | 25,70 | 25,50 |
| Rückprall @ 70 °C | Prozent | 47,10 | 49,00 | 49,90 | 48,30 | 48,50 |
| Abrieb | mm³ | 125,00 | 95,00 | 99,00 | 88,00 | 86,00 |

**TABELLE 6**

| **Zusammensetzung** | | **C5** | **E16** |
|---|---|---|---|
| TSR | phr | 10,00 | 10,00 |
| BR | phr | 35,00 | 35,00 |
| SSBR, öl-gestreckt | phr | 75,62 | 75,62 |
| Ruß, N 339 | | 12,00 | 12,00 |
| Kieselsäure (VN3) | phr | 85,00 | 85,00 |
| Weichmacher | phr | 11,37 | 11,37 |
| 6PPD | phr | 2,00 | 2,00 |
| TMQ | phr | 2,00 | 2,00 |
| Ozonschutzwachs | phr | 2,50 | 2,50 |
| ZnO | phr | 2,50 | 2,50 |
| Stearinsäure | phr | 1,00 | 1,00 |
| Fettsäureester & Zn-Seifen | phr | 4,00 | 4,00 |
| TESPD-Silan | phr | 6,00 | - |
| Silan mit verzweigtem Kohlenwasserstoffkern | phr | - | 6,20 |
| | | | |
| MBT | phr | 0,10 | - |
| TBZTD | phr | - | 0,20 |
| DPG | phr | 2,00 | 2,00 |
| TBBS | phr | - | 2,00 |
| CBS | phr | 2,00 | - |
| Schwefel | phr | 2,20 | 1,39 |
| | | | |

| **Schwefelquelle** | | **C5** | **E16** |
|---|---|---|---|
| Gesamter Schwefel | mmol/phr | 94 | 55,6 |
| Freier Schwefel | Prozent | 73,1 | 46,2 |
| Schwefeldonor | Prozent | 0,0 | 0,8 |
| Silan | Prozent | 26,9 | 53,0 |

| **Physikalische Eigenschaften** | | **C5** | **E16** |
|---|---|---|---|
| T-010 | Min | 2,1 | 1,34 |
| T-040 | Min | 4,25 | 4,09 |
| T-090 | Min | 11,72 | 11,06 |
| T-095 | Min | 16,74 | 15,72 |
| Δ Drehmoment | dNm | 18,56 | 18,55 |
| Mooney- Viskosität @ 100 °C | Mooney-Einheiten | 68,7 | 72,1 |
| Härte @ RT | Shore A | 69 | 69 |
| Härte @ 70 °C | Shore A | 66 | 67 |
| Modul 50 % | MPa | 1,45 | 1,47 |
| Modul 100 % | MPa | 2,45 | 2,52 |
| Modul 300 % | MPa | 10,09 | 11,42 |
| Zugfestigkeit | MPa | 15,1 | 15,4 |
| Reißdehnung | Prozent | 454 | 412 |
| Rückprall @ RT | Prozent | 29 | 32 |
| Rückprall @ 70 °C | Prozent | 44 | 47 |
| Abrieb | Prozent | 100 | 45 |

**TABELLE 7**

| **Zusammensetzung** | | **C6** | **E17** | **C7** | **E18** | **E19** |
|---|---|---|---|---|---|---|
| NR | phr | 30,000 | 30,000 | 5,000 | 5,000 | 5,000 |
| BR | phr | - | - | 15,000 | 15,000 | 15,000 |
| SSB, funktionalisiert | phr | 70,000 | 70,000 | 80,000 | 80,000 | 80,000 |
| Ruß | phr | 5 | 5 | 5,000 | 5,000 | 5,000 |
| Kieselsäure (HD-Silica) | phr | 60,000 | 60,000 | 75,000 | 75,000 | 75,000 |
| Weichmacher, Harz | phr | 12 | 12 | 10,000 | 10,000 | 10,000 |
| Sylvares TR B115® | phr | - | - | 5,000 | 5,000 | 5,000 |
| Alterungsschutzmittel | phr | 5,200 | 5,200 | 5,200 | 5,200 | 5,200 |
| Ozonschutzwachs | phr | 2,000 | 2,000 | 2,000 | 2,000 | 2,000 |
| ZnO | phr | 2,000 | 2,000 | 2,000 | 2,000 | 2,000 |
| Stearinsäure | phr | 1,000 | 1,000 | 1,000 | 1,000 | 1,000 |
| Fettsäureester & Zn-Seifen | phr | - | - | 6,000 | 6,000 | 6,000 |
| NXT-Silan mit niedrigem VOC | phr | 7,320 | 7,320 | - | - | - |
| Silan, SI 363® (Klasse 3) | phr | - | - | 9,000 | 9,000 | 9,000 |
| | | | | | | |
| MBT | phr | - | - | 1,000 | 0,500 | 1,000 |
| TBZTD | phr | - | 2,000 | 0,250 | 2,000 | 2,000 |
| DPG | phr | 1,600 | 1,600 | - | 2,100 | 2,100 |
| TBBS | phr | - | 1,810 | 3,500 | 2,770 | 2,770 |
| CBS | phr | 2,000 | - | - | - | - |
| SCHWEFEL | phr | 1,700 | 0,420 | 1,700 | 0,440 | 0,440 |
| | | | | | | |

| **Schwefelquelle** | | **C6** | **E17** | **C7** | **E18** | **E19** |
|---|---|---|---|---|---|---|
| Gesamter Schwefel | mmol/phr | 73,3 | 40,6 | 63,2 | 30,2 | 30,2 |
| Freier Schwefel | Prozent | 72,4 | 32,3 | 84,1 | 45,5 | 45,5 |
| Schwefeldonor | Prozent | 0 | 18,1 | 1,5 | 24,3 | 24,3 |
| Silan | Prozent | 27,5 | 49,6 | 14,4 | 30,1 | 30,1 |

| **Physikalische Eigenschaften** | | **C6** | **E17** | **C7** | **E18** | **E19** |
|---|---|---|---|---|---|---|
| Mooney (ML1+4) @ 100 °C | Mooney-Einheiten | 59,1 | 61,7 | 80,1 | 84,5 | 85,9 |
| T-010 | min | 1,54 | 2,2 | 3,73 | 2,24 | 1,73 |
| T-040 | min | 1,97 | 3,19 | 4,84 | 3,61 | 2,9 |
| T-090 | min | 3,87 | 5,92 | 7,6 | 7,85 | 7,03 |
| T-095 | min | 5,07 | 7,02 | 8,9 | 9,21 | 8,36 |
| Δ Drehmoment | dNm | 15,39 | 12,62 | 16,68 | 14,2 | 14,48 |
| Härte Shore A RT | Shore A | 62,8 | 60,1 | 65 | 61,7 | 63,15 |
| Härte Shore A 70'C | Shore A | 61,2 | 58,1 | 62,5 | 59,65 | 60,35 |
| Rückprallelastizität RT | Prozent | 34 | 33,5 | 27 | 32,3 | 31,2 |
| Rückprallelastizität 70 °C | Prozent | 62,9 | 59,1 | 64,3 | 63,1 | 62,8 |
| Zugfestigkeit | MPa | 13,476 | 16,354 | 15,479 | 17,623 | 16,254 |
| Bruchdehnung | Prozent | 333,786 | 450,547 | 318,988 | 372,159 | 341,233 |
| Spannung (Modul) - 50 | MPa | 1,446 | 1,168 | 1,564 | 1,331 | 1,406 |
| Spannung (Modul) - 100 | MPa | 2,808 | 2,112 | 3,195 | 2,661 | 2,796 |
| Spannung (Modul) - 300 | MPa | 13,219 | 10,33 | 15,995 | 14,924 | 15,128 |
| Abrieb | mm³ | 91 | 52 | 103 | 66 | 70 |

**TABELLE 8**

| **Zusammensetzung** | | **C8** | **E20** | **E21** | **E22** | **E23** | **E24** | **E25** | **E26** |
|---|---|---|---|---|---|---|---|---|---|
| TSR | phr | 20,000 | 20,000 | 20,000 | 20,000 | 20,000 | 20,000 | 20,000 | 20,000 |
| BR | phr | 44,000 | 44,000 | 44,000 | 44,000 | 44,000 | 44,000 | 44,000 | 44,000 |
| SSBR | phr | 36,000 | 36,000 | 36,000 | 36,000 | 36,000 | 36,000 | 36,000 | 36,000 |
| Kieselsäure (ZEOSIL 1165 MP) | phr | 95,000 | 95,000 | 95,000 | 95,000 | 95,000 | 95,000 | 95,000 | 95,000 |
| Weichmacher | phr | 45,000 | 45,000 | 45,000 | 45,000 | 45,000 | 45,000 | 45,000 | 45,000 |
| 6PPD | phr | 2,000 | 2,000 | 2,000 | 2,000 | 2,000 | 2,000 | 2,000 | 2,000 |
| TMQ | phr | 2,000 | 2,000 | 2,000 | 2,000 | 2,000 | 2,000 | 2,000 | 2,000 |
| Ozonschutzwachs | phr | 2,000 | 2,000 | 2,000 | 2,000 | 2,000 | 2,000 | 2,000 | 2,000 |
| ZnO | phr | 2,500 | 2,500 | 2,500 | 2,500 | 2,500 | 2,500 | 2,500 | 2,500 |
| Stearinsäure | phr | 2,500 | 2,500 | 2,500 | 2,500 | 2,500 | 2,500 | 2,500 | 2,500 |
| Silan TESPT | phr | - | 6,600 | 6,600 | 6,600 | 6,600 | - | - | - |
| Silan TESPD | phr | 8,080 | - | - | - | - | 5,920 | 5,920 | 5,920 |
| TBZTD | phr | - | 1,750 | - | - | - | - | - | - |
| DPG | phr | 2,000 | - | - | - | - | - | - | - |
| TBBS | phr | - | 1,580 | 1,580 | 1,580 | 1,580 | 1,580 | 1,580 | 1,580 |
| CBS | phr | 1,600 | - | - | - | - | - | - | - |
| Rhenogran SDT 50® | phr | - | - | 4,710 | - | - | 4,710 | - | - |
| DIPDIS | phr | - | - | - | - | 1,370 | - | - | 1,370 |
| Schwefel | phr | 2,000 | - | - | - | - | 0,660 | 0,660 | 0,660 |
| Rhenocure ZDT/s® | phr | - | - | - | 3,550 | - | - | 3,550 | - |
| | | | | | | | | | |

| **Schwefelquelle** | | **C8E** | **20** | **E21** | **E22** | **E23** | **E24** | **E25** | **E26** |
|---|---|---|---|---|---|---|---|---|---|
| Gesamter Schwefel | mmol/phr | 96,2 | 56,1 | 56,1 | 56,1 | 56,1 | 51,17 | 51,7 | 51,7 |
| Freier Schwefel | Prozent | 65 | 0,0 | 0,0 | 0 | 0 | 39,8 | 39,8 | 39,8 |
| Schwefeldonor | Prozent | 11,5 | 11,5 | 0 | 11,5 | 11,5 | 12,4 | 12,4 | 12,4 |
| Silan | Prozent | 35 | 49,6 | 88,5 | 88,5 | 88,5 | 47,7 | 47,7 | 47,7 |

| **Physikalische Eigenschaften** | | **C8** | **E20** | **E21** | **E22** | **E23** | **E24** | **E25** | **E26** |
|---|---|---|---|---|---|---|---|---|---|
| Mooney (ML 1+4) | Mooney-Einheiten | 44,9 | 58,7 | 68 | 59,5 | 59,3 | 96,1 | 60,5 | 68,2 |
| T-010 | min | 2,37 | 0,63 | 0,51 | 0,63 | 0,5 | 1,63 | 0,62 | 0,62 |
| T-040 | min | 6,5 | 2,84 | 2,76 | 2,62 | 2,68 | 2,37 | 4,14 | 3,48 |
| T-095 | min | 17,6 | 14,67 | 15,72 | 18,3 | 12,83 | 7,65 | 14,19 | 10,27 |
| Δ Drehmoment | dNm | 17,49 | 21,32 | 22,56 | 21,02 | 18,89 | 19 | 21,13 | 19,75 |
| Härte Shore A RT | Shore A | 61,25 | 63,8 | 64,2 | 63,6 | 62,55 | 67,45 | 64,3 | 64,1 |
| Härte Shore A 70°C | Shore A | 57,35 | 60,5 | 61,25 | 59,35 | 58,7 | 64,2 | 60,85 | 60,75 |
| Rückprall RT | Prozent | 35 | 38,9 | 38,9 | 37,2 | 36,8 | 39,5 | 38 | 36,5 |
| Rückprall 70°C | Prozent | 46,2 | 47,8 | 46,7 | 44,7 | 45,3 | 47 | 46,3 | 44,1 |
| Zugfestigkeit | MPa | 13,705 | 12,133 | 14,517 | 13,584 | 13,609 | 15,364 | 15,087 | 13,943 |
| Bruchdehnung | Prozent | 698,534 | 486,684 | 556,151 | 559,482 | 581,13 | 624,856 | 585,484 | 602,256 |
| Spannung (Modul) - 50 | MPa | 0,93 | 1,054 | 1,098 | 1,051 | 1,016 | 1,194 | 1,12 | 1,103 |
| Spannung (Modul) - 100 | MPa | 1,446 | 1,668 | 1,721 | 1,615 | 1,579 | 1,783 | 1,758 | 1,663 |
| Spannung (Modul) - 300 | MPa | 4,924 | 6,734 | 6,825 | 6,285 | 6,05 | 6,254 | 6,608 | 5,877 |
| Bruchenergiedichte | J/cm³ | 38,794 | 22,645 | 31,513 | 29,657 | 31,083 | 38,241 | 34,484 | 32,944 |
| Abrieb | mm³ | 74,47 | 29,53 | 30,8 | 29,11 | 32,91 | 40,77 | 30,9 | 32,61 |

**TABELLE 9**

| **Zusammensetzung** | | **C9** | **E27** | **E28** | **C10** | **E29** | **E30** |
|---|---|---|---|---|---|---|---|
| TSR | phr | 50,000 | 50,000 | 50,000 | 50,000 | 50,000 | 50,000 |
| BR | phr | 50,000 | 50,000 | 50,000 | 50,000 | 50,000 | 50,000 |
| Ruß, N 339 | phr | 15,000 | 13,000 | 13,000 | 45,000 | 45,000 | 45,000 |
| Kieselsäure (VN3) | phr | 30,000 | 30,000 | 30,000 | - | - | - |
| Weichmacher | phr | 4,000 | 4,000 | 4,000 | 4,000 | 4,000 | 4,000 |
| Harze | phr | 6,000 | 6,000 | 6,000 | 6,000 | 6,000 | 6,000 |
| Alterungsschutzmittel | phr | 4,000 | 4,000 | 4,000 | 4,000 | 4,000 | 4,000 |
| Ozonschutzwachs | phr | 2,000 | 2,000 | 2,000 | 2,000 | 2,000 | 2,000 |
| ZnO | phr | 3,000 | 3,000 | 3,000 | 3,000 | 3,000 | 3,000 |
| Stearinsäure | phr | 2,000 | 2,000 | 2,000 | 2,000 | 2,000 | 2,000 |
| TESPT 50% auf Ruß | phr | 4,000 | 4,000 | 4,000 | - | 6,842 | 6,842 |
| Nanoprene B PMOOH VP® | phr | - | - | - | - | - | 15,000 |
| Nanoprene B M15OH VP® | phr | - | - | - | - | 15,000 | - |
| | | | | | | | |
| TBZTD | phr | - | 1,350 | 1,100 | - | 1,632 | 1,632 |
| DPG | phr | 0,500 | - | - | - | - | - |
| TBBS | phr | - | 1,220 | 1,000 | | | |
| CBS | phr | 1,300 | - | - | 0,700 | 0,700 | 0,700 |
| Schwefel | phr | 1,300 | 0,430 | 0,460 | 1,400 | - | - |
| | | | | | | | |

| **Schwefelquelle** | | **C9** | **E27** | **E28** | **C10** | **E29** | **E30** |
|---|---|---|---|---|---|---|---|
| Gesamter Schwefel | mmol/phr | 55,6 | 33,4 | 33,5 | 43,8 | 31,7 | 31,7 |
| Freier Schwefel | % | 73,0 | 40,4 | 43,2 | 0,0 | 0,0 | 0,0 |
| TBzTD | % | 0,0 | 14,9 | 12,2 | 0,0 | 19,0 | 19,0 |
| Silan | % | 27,0 | 44,7 | 44,7 | 100,0 | 81,0 | 81,0 |

| **Physikalische Eigenschaften** | | **C9** | **E27** | **E28** | **C10** | **E29** | **E30** |
|---|---|---|---|---|---|---|---|
| Mooney (ML1+4) | Mooney-Einh. | 53,9 | 64,9 | 66,4 | 50,1 | 48,9 | 46 |
| T-010 | min | 2,6073 | 2,27 | 2,24 | 3,423 | 1,5213 | 1,5598 |
| T-040 | min | 4,6823 | 3,09 | 3,17 | 4,674 | 3,052 | 3,0893 |
| T-095 | min | 8,2763 | 11,16 | 12,01 | 9,0702 | 23,6263 | 23,5252 |
| Δ Drehmoment | dNm | 10,14 | 11,46 | 10,27 | 9,63 | 11,64 | 11,33 |
| Härte RT | Shore A | 50,25 | 54,2 | 51,9 | 52,7 | 57,55 | 57,45 |
| Härte 70 °C | Shore A | 47,9 | 51,8 | 49,25 | 48,35 | 54,5 | 54,65 |
| Rückprall RT | % | 49,9 | 55 | 52,7 | 45,625 | 47,75 | 43,405 |
| Rückprall 70°C | % | 55,35 | 63,1 | 59,2 | 51,69 | 59,9 | 59,66 |
| Zugfestigkeit | MPa | 16,903 | 12,984 | 12,996 | 18,6567 | 11,8 | 13,5567 |
| Bruchdehnung | % | 740,4 | 502,885 | 553,796 | 696,4333 | 350,1333 | 398,4333 |
| Spannung (Modul) - 50 | MPa | 0,7267 | 0,902 | 0,817 | 0,82 | 1,0933 | 1,1067 |
| Spannung (Modul) - 100 | MPa | 1,0767 | 4,458 | 1,273 | 1,2533 | 1,93 | 1,9667 |
| Spannung (Modul) - 300 | MPa | 4,2967 | 6,512 | 5,47 | 6,12 | 10,6767 | 10,1733 |
| Abrieb | | 49,57 | 34,95 | 37,35 | 48,01 | 28,99 | 22,4 |

**TABELLE 10**

| **Zusammensetzung** | | **C11** | **E31** | **E32** | **E33** | **E34** |
|---|---|---|---|---|---|---|
| NR | phr | 100,000 | 100,000 | 100,000 | 100,000 | 100,000 |
| Ruß, N 121 | phr | 5,000 | 5,000 | 5,000 | 5,000 | 5,000 |
| Kieselsäure ZEOSIL 1165 MP | phr | 50,000 | 50,000 | 50,000 | 50,000 | 50,000 |
| Ozonschutzwachs | phr | 2,500 | 2,500 | 2,500 | 2,500 | 2,500 |
| Silan TESPT | phr | 5,000 | 4,727 | 4,343 | 4,343 | 3,959 |
| Silan TESPD | phr | - | - | - | - | - |
| Alterungsschutzmittel | phr | 2,500 | 2,5 | 2,5 | 2,5 | 2,5 |
| ZnO | phr | 3,000 | 3,000 | 3,000 | 3,000 | 3,000 |
| Stearinsäure | phr | 2,000 | 2,000 | 2,000 | 2,000 | 2,000 |
| Prozesshilfsmittel | phr | 4,000 | 4,000 | 4,000 | 4,000 | 4,000 |
| | | | | | | |
| TBZTD | phr | - | 2,067 | 2,067 | 2,067 | 2,067 |
| DPG | phr | 1,000 | 1,000 | 1,000 | - | 1,000 |
| TBBS | phr | 1,900 | 1,900 | 1,900 | 1,900 | 1,900 |
| Schwefel | phr | 1,800 | - | 0,079 | 0,079 | 0,158 |
| | | | | | | |

| **Schwefelquelle** | | **C11** | **E31** | **E32** | **E33** | **E34** |
|---|---|---|---|---|---|---|
| gesamter Schwefel | mmol/phr | 93,8 | 43,1 | 42,7 | 42,7 | 42,3 |
| Freier Schwefel | % | 60,0 | 0,0 | 5,8 | 5,8 | 11,7 |
| TBzTD | % | 0,0 | 17,6 | 17,7 | 17,8 | 17,9 |
| Silan | % | 40 | 82,4 | 76,4 | 76,4 | 70,4 |

| **Physikalische Eigenschaften** | | **C11** | **E31** | **E32** | **E33** | **E34** |
|---|---|---|---|---|---|---|
| Mooney (ML 1+4) | Mooney-Einheiten | 53,4 | 51,8 | 51,2 | 52,5 | 50,4 |
| T-005 | Min | 1,3748 | 1,5358 | 1,5517 | 1,8198 | 1,5935 |
| T-040 | Min | 2,4163 | 3,4834 | 3,2277 | 3,7702 | 3,0482 |
| T-095 | Min | 6,1588 | 15,0135 | 13,7017 | 17,7655 | 12,6697 |
| Δ Drehmoment | dNm | 21,89 | 17,83 | 17,8 | 16,99 | 17,74 |
| Härte Shore A RT | Shore A | 67,35 | 63,7 | 63,15 | 61,5 | 63,3 |
| Härte Shore A 70 °C | Shore A | 67,1 | 61,1 | 60,35 | 59,15 | 60,75 |
| Rückprallelastizität RT | % | 56,525 | 52,42 | 51,87 | 52,1 | 51,825 |
| Rückprallelastizität 70 °C | % | 68,6 | 66,375 | 66,915 | 66,37 | 65,88 |
| Zugfestigkeit | MPa | 1,79 | 1,42 | 1,4867 | 1,4233 | 1,37 |
| Bruchdehnung | % | 3,6033 | 2,7567 | 2,9067 | 2,78 | 2,6333 |
| Spannung (Dehnung)-50 | MPa | 16,81 | 16,1967 | 17,1233 | 16,21 | 15,9233 |
| Spannung (Dehnung)-100 | MPa | 25,4833 | 23,18 | 23,0933 | 23,3967 | 24,03 |
| Spannung (Dehnung)-300 | MPa | 475,0333 | 436,8667 | 416,8667 | 439,9667 | 454,2 |
| Abrieb | mm³ | 110 | 58 | 70 | 64 | 69 |

**TABELLE 11**

| **Zusammensetzung** | | **C11** | **E35** | **E36** | **E37** | **E38** |
|---|---|---|---|---|---|---|
| NR | phr | 100,000 | 100,000 | 100,000 | 100,000 | 100,000 |
| Ruß, N 121 | phr | 5,000 | 5,000 | 5,000 | 5,000 | 5,000 |
| Kieselsäure ZEOSIL 1165 MP | phr | 50,000 | 50,000 | 50,000 | 50,000 | 50,000 |
| Ozonschutzwachs | phr | 2,500 | 2,500 | 2,500 | 2,500 | 2,500 |
| Silan TESPT | phr | 5,000 | - | - | - | - |
| Silan TESPD | phr | - | 8,482 | 7,792 | 7,792 | 7,103 |
| Alterungsschutzmittel | phr | 2,500 | 2,500 | 2,500 | 2,500 | 2,500 |
| ZnO | phr | 3,000 | 3,000 | 3,000 | 3,000 | 3,000 |
| Stearinsäure | phr | 2,000 | 2,000 | 2,000 | 2,000 | 2,000 |
| Prozesshilfsmittel | phr | 4,000 | 4,000 | 4,000 | 4,000 | 4,000 |
| | | | | | | |
| TBZTD | phr | - | 2,067 | 2,067 | 2,067 | 2,067 |
| DPG | phr | 1,000 | 1,000 | 1,000 | - | 1,000 |
| TBBS | phr | 1,900 | 1,900 | 1,900 | 1,900 | 1,900 |
| Schwefel | phr | 1,800 | - | 0,079 | 0,079 | 0,158 |
| | | | | | | |

| **Schwefelquelle** | | **C11** | **E35** | **E36** | **E37** | **E38** |
|---|---|---|---|---|---|---|
| gesamter Schwefel | mmol/phr | 93,8 | 42,9 | 42,8 | 42,5 | 42,1 |
| Freier Schwefel | % | 60,0 | 0,0 | 5,800 | 5,800 | 11,700 |
| TBzTD | % | 0,0 | 17,7 | 17,900 | 17,900 | 18,000 |
| Silan | % | 40 | 82,3 | 76,3 | 76,3 | 70,2 |

| **Physikalische Eigenschaften** | | **C11** | **E35** | **E36** | **E37** | **E38** |
|---|---|---|---|---|---|---|
| Mooney (ML 1+4) | Mooney-Einheiten | 53,4 | 45,7 | 46,5 | 49,2 | 47,2 |
| T-005 | Min | 1,3748 | 1,7425 | 1,9427 | 2,6123 | 1,997 |
| T-040 | Min | 2,4163 | 6,3567 | 5,1857 | 6,6093 | 4,389 |
| T-095 | Min | 6,1588 | 23,1908 | 21,8623 | 25,2527 | 20,7663 |
| Δ Drehmoment | dNm | 21,89 | 16,75 | 18,02 | 15,88 | 18,74 |
| Härte Shore A RT | Shore A | 67,35 | 63,9 | 64,55 | 63,4 | 66,6 |
| Härte Shore A 70 °C | Shore A | 67,1 | 58,05 | 61,4 | 50,3 | 62,55 |
| Rückprallelastizität RT | % | 56,525 | 39,92 | 42,755 | 44,755 | 44,275 |
| Rückprallelastizität 70 °C | % | 68,6 | 51,005 | 55,16 | 59,665 | 57,66 |
| Zugfestigkeit | MPa | 1,79 | 1,3033 | 1,43 | 1,4 | 1,52 |
| Bruchdehnung | % | 3,6033 | 2,1333 | 2,5033 | 2,57 | 2,79 |
| Spannung (Dehnung)-50 | MPa | 16,81 | 11,6633 | 13,7267 | 14,7333 | 15,1733 |
| Spannung (Dehnung)-100 | MPa | 25,4833 | 21,5433 | 21,57 | 23,2667 | 19,8433 |
| Spannung (Dehnung)-300 | MPa | 475,0333 | 513,3667 | 461,3667 | 467,5333 | 402,5333 |
| Abrieb | mm³ | 110 | 91 | 80 | 67 | 64 |

### Zusätzliche Informationen für die oben stehenden Tabellen:

Das in den Beispielen verwendete Silan mit verzweigtem Kohlenwasserstoffkern ist jeweils gleich und in der US 11/617,663 im dortigen Beispiel 2 beschrieben.
- Tabelle 1: PKW-Laufstreifenmischung einschließlich Reifentest.
- Tabelle 2: PKW-Laufstreifenmischung einschließlich Reifentest, Vergleich von drei Silantypen und Vergleich mit einem üblicherweise verwendeten Vulkanisationssystem (Bsp. C3, niedriger Schwefelgehalt, kein Schwefeldonor).
- Tabelle 3: PKW-Laufstreifenmischung, Variationen der Schwefeldosis.
- Tabelle 4: PKW- Laufstreifenmischung, Variationen der Schwefeldosis und des Silan-Typs.
- Tabelle 5: PKW- Laufstreifenmischung, Variationen der Schwefel- und Schwefeldonor-Dosis für Silan der Klasse 2.
- Tabelle 6: PKW- Laufstreifenmischung, Silan mit verzweigtem Kohlenwasserstoffkern in unterschiedlichen Mischungszusammensetzungen.
- Tabelle 7: PKW- Laufstreifenmischung, Verwendung von Klasse-2- und Klasse-3-Silan.
- Tabelle 8: PKW- Laufstreifenmischung, Verwendung von verschiedenen Dithiophosphaten als Schwefeldonor.
- Tabelle 9: Seitenwandmischung, Verwendung von Kieselsäure oder OH-Gruppenhaltigem Mikrogel als Füllstoff.
- Tabelle 10: LKW- Laufstreifenmischung mit zwei Silantypen.
- Tabelle 11: LKW- Laufstreifenmischung mit zwei Silantypen.

## Patentansprüche

1. Kautschukmischung für Anwendungen im PKW-Laufstreifen enthaltend:
- 30 bis 100 phr zumindest eines Dienkautschuks;
- 45 bis 200 phr zumindest eines Füllstoffs, wobei Kieselsäure als Füllstoff in Mengen von 45 bis 150 phr vorhanden ist;
- 0 bis 200 phr weitere Zusatzstoffe;
- ein Schwefelvulkanisationssystem enthaltend freien Schwefel, Schwefeldonor und Silan, wobei das Silan ein S:Si- Verhältnis kleiner als 1,6 hat und die Anzahl der Si-Atome größer oder gleich 1 ist und ein Mw pro Si-AtomVerhältnis kleiner als 390 g/mol besitzt, mit einer durch diese Bestandteile erzielten Schwefelkonzentration zwischen 0,035 bis 0,07 mhr, wobei der Anteil an freiem Schwefel 20 bis 50 % und der Anteil des Schwefeldonors 5 bis 20 % und der Anteil Silan 50 bis 70 % beträgt und
- 0,1 bis 10 phr zumindest Vulkanisationsbeschleunigers.

2. Kautschukmischung nach Anspruch 1, **dadurch gekennzeichnet, dass** der Vulkanisationsbeschleuniger ausgewählt ist aus der Gruppe, bestehend aus Sulfenamidbeschleunigern und Thiurambeschleunigern, die nicht Schwefeldonoren sind.

3. Kautschukmischung nach Anspruch 1, **dadurch gekennzeichnet, dass** der Schwefeldonor ausgewählt ist aus der Gruppe, bestehend aus Thiuramdisulfiden oder Thiophosphaten.

4. Verwendung einer Kautschukmischung nach Anspruch 1 zur Herstellung eines Reifens.

5. Verwendung einer Kautschukmischung nach Anspruch 1 zur Herstellung eines Schlauches, einer Luftfeder, eines Gummidämpfers, eines Riemens oder eines Gurtes.

## Claims

1. Rubber mixture for applications in passenger car tyre treads containing:
- 30 to 100 phr of at least one diene rubber;
- 45 to 200 phr of at least one filler, wherein silica is present as filler in amounts of 45 to 150 phr;
- 0 to 200 phr of additional additives;
- a sulfur vulcanization system containing free sulfur, sulfur donor and silane, wherein the silane has an S:Si ratio of less than 1.6 and the number of Si atoms is greater than or equal to 1 and has a Mw per Si atom ratio of less than 390 g/mol, with a sulfur concentration achieved by these constituents between 0.035 to 0.07 mhr, wherein the proportion of free sulfur is 20% to 50% and the proportion of the sulfur donor is 5% to 20% and the proportion of silane is 50% to 70% and
- 0.1 to 10 phr of at least one vulcanization accelerator.

2. Rubber mixture according to Claim 1, **characterized in that** the vulcanization accelerator is selected from the group consisting of sulfenamide accelerators and thiuram accelerators which are not sulfur donors.

3. Rubber mixture according to Claim 1, **characterized in that** the sulfur donor is selected from the group consisting of thiuram disulfides or thiophosphates.

4. Use of a rubber mixture according to Claim 1 for producing a tyre.

5. Use of a rubber mixture according to Claim 1 for producing a hose, an air spring, a rubber shock absorber or a drive belt or other belt.

## Revendications

1. Mélange de caoutchouc destiné à des applications dans une bande de roulement automobile, contenant :
- 30 à 100 pce d'au moins un caoutchouc diénique ;
- 45 à 200 pce d'au moins une charge, de la silice étant présente en tant que charge en quantités de 45 à 150 pce ;
- 0 à 200 pce d'autres additifs ;
- un système de vulcanisation au soufre contenant du soufre libre, un donneur de soufre et un silane, le silane ayant un rapport S:Si inférieur à 1,6, et le nombre d'atomes Si étant supérieur ou égal à 1, et présentant un rapport Mw par atome Si inférieur à 390 g/mol, ayant une concentration en soufre obtenue par ces constituants comprise entre 0,035 et 0,07 mce, la proportion de soufre libre étant de 20 à 50 % et la proportion du donneur de soufre étant de 5 à 20 %, et la proportion de silane étant de 50 à 70 %, et
- 0,1 à 10 pce d'au moins un accélérateur de vulcanisation.

2. Mélange de caoutchouc selon la revendication 1, **caractérisé en ce que** l'accélérateur de vulcanisation est choisi dans le groupe constitué par les accélérateurs sulfénamide et les accélérateurs thiuram, qui ne sont pas des donneurs de soufre.

3. Mélange de caoutchouc selon la revendication 1, **caractérisé en ce que** le donneur de soufre est choisi dans le groupe constitué par les disulfures de thiuram ou les thiophosphates.

4. Utilisation d'un mélange de caoutchouc selon la revendication 1 pour la fabrication d'un pneu.

5. Utilisation d'un mélange de caoutchouc selon la revendication 1 pour la fabrication d'un tuyau, d'un ressort pneumatique, d'un amortisseur en caoutchouc, d'une courroie ou d'une ceinture.
